(19) Europäisches Patentamt

European Patent Office

Office européen des brevets

(11) **EP 0 943 955 A2**

(12) **EUROPEAN PATENT APPLICATION**

(43) Date of publication:
22.09.1999 Bulletin 1999/38

(51) Int. Cl.$^6$: **G03B 7/091**

(21) Application number: 99104653.3

(22) Date of filing: 09.03.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 16.03.1998 JP 6540798

(71) Applicant: **SEIKO PRECISION INC.**
**Tokyo (JP)**

(72) Inventors:
• **Seki, Yoichi**
 **Yotsukaido-shi, Chiba-ken (JP)**
• **Oda, Hajime**
 **Yotsukaido-shi, Chiba-ken (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Photometric device and camera using the photometric device**

(57) It is the problem to provide a photometric device of low cost and low current consumption, which can be used in a film with a lens or the like.

Brightness deciding means 35 judges an ambient brightness in accordance with the output of a counter 22 for counting the output of a first oscillator 33 having an oscillatory frequency unchanged according to the ambient brightness, and the output of a counter 24 for counting the output of a second oscillator 34 having an oscillatory frequency changed according to the ambient brightness. In this case, the ambient brightness is judged not according to the outputs coming from the individual oscillators 33 and 34 but according to the outputs of the individual counters 22 and 24 for counting the outputs of the individual oscillators 33 and 34. Even if the second oscillator 34 used is not changed so much in its oscillatory frequency in accordance with the ambient brightness, therefore, the slight differences can be accumulated by a counter so that the ambient brightness can be reliably judged according to the accumulated outputs.

FIG.1

EP 0 943 955 A2

## Description

The present invention relates to a photometric device to be used in a camera or especially a film with a lens or an inexpensive camera (as will be called the "low-end camera"), in which the film is advanced by turning a dial manually, and a camera using the photometric device.

Some commercially available low end camera has a stroboscope packaged therein for photographies even when the ambient brightness is low.

Usually, this camera takes a photograph by utilizing the latitude of the film but has no function of detecting the brightness. In the camera having the stroboscope packaged therein, further, the charge of the stroboscope is started by pushing a stroboscope charging switch which is disposed separately of a release switch.

Whether or not the stroboscope is to flash depends upon the judgment of the photographer himself. The photographer having less experiences may take a black photograph without flashing the stroboscope even in a low ambient brightness or may flash the stroboscope although unnecessarily even when the ambient brightness is high.
Moreover, the low-end camera is required for reliable actions with a power supply of low voltage and capacity such as one dry cell (at about 1.5 V) from the point of reducing the cost, space and weight.

A camera more expensive than the low-end camera is equipped with a circuit for judging the brightness. This brightness deciding circuit uses a combination of a microcomputer and an analog/digital converter or a comparator. The power supply for the microcomputer has to be as high as about 3 V at least, and the comparator has to be as high as about 2 V even if it is fabricated by the bipolar process. Moreover, the microcomputer or comparator is not only expensive but also high in current consumption so that a dry cell or a power supply of low capacity will be seriously consumed. This makes it difficult for such a power supply of one dry cell to activate those circuits as may be temporarily lowered to about 1 V by a load even when a necessary and sufficient voltage is left.

In order to improve the characteristics against the fluctuations in the temperature and the supply voltage, such brightness deciding circuit is required for using external memory means such as EEPROM (Electric Erasable Programmable Read Only Memory) or for having an additional temperature compensation circuit. Thus, the circuit construction is more expensive and larger.

In order to solve these problems, we have proposed, in our preceding Japanese Patent Application No. 9-357204, a photometric circuit and a stroboscope driving circuit which are best suited for the low-end camera by mounting the major portion of the photometric circuit in one integrated circuit and by adding a peripheral circuit.

When this circuit uses an inexpensive CdS having poor responsive characteristics so as to lower the cost, however, it is necessary to reduce the oscillatory frequency of an oscillator and to enlarge the capacity of a capacitor to be connected with the oscillator. This makes it difficult to mount the capacitor in one integrated circuit so that a capacitor having a larger capacity has to be externally attached. It is further necessary to externally attach a variable resistor, which has to be adjusted. These external attachments of parts are not preferred in space and cost for the small-sized inexpensive low-end camera.

In the invention, brightness deciding means judges the ambient brightness in accordance with the outputs of first counting means for counting the output of a first oscillator and second counting means for counting the output of a second oscillator having an oscillatory frequency changed according to an ambient brightness. As a result, the cost and current consumption can be made lower than those of the prior art without requiring the microcomputer or the comparator. On the other hand, the ambient brightness is judged not according to the outputs from the individual oscillators but according to the outputs of the individual counting means for counting the outputs of the individual oscillators. Even if the second oscillator used has little change in the oscillatory frequency in accordance with the ambient brightness, therefore, the slight differences can be accumulated by the counting means so that the ambient brightness can be reliably judged according to the accumulated outputs. This makes it unnecessary to use the second oscillator which is expensive and large-sized to have an excellent brightness responsibility.

The ambient brightness is judged on the basis of the phase difference between the outputs of the first and second counting means so that effects similar to the aforementioned ones can be achieved.

The first and second oscillators, the first and second counting means and the brightness deciding means are formed over a common chip by the CMOS (Complementary Metal Oxide Semiconductor) process so that the photometric device can be operated at a voltage of 1 V or less on principle. If this photometric device is applied to the low-end camera or the like, therefore, a reliable action can be expected even with a power supply of low voltage and small capacity such as one dry cell (at about 1.5 V).

Since the first and second oscillators are made symmetric in their circuitry, the change in the ambient temperature and the fluctuation of the voltage can be offset to stabilize the action and to make it unnecessary to add a temperature compensating circuit unlike the prior art. This effect is made prominent by integrating the necessary portions into a circuit.

There is provided a camera comprising: an auxiliary light projecting means for projecting an auxiliary light to an object; a first switch means; an output means for generating a timing signal by the first switch means; and a charging circuit for performing a charge for causing the auxiliary light projecting means to project the light in accordance with the outputs of the output means and the brightness deciding means. As a result, the auxiliary light can be automatically projected according to the ambient brightness with the construction which can achieve a lower cost, a lower current consumption and a smaller space than those of the prior art.

The output means inhibits the charging action of the charging circuit when the second switch means is not operated for a desired time period after the first switch means was activated. This makes it possible to avoid the situation, in which the charge is unnecessarily continued although the photographer has no will, to suppress the useless power consumption.

By the action of the second switch means before the film is advanced, actions similar to those of the case in which the first switch means is activated are executed so that the photography accompanied by the automatic auxiliary light projection can be realized merely by the action of the second switch means thereby to improve the operability.

The invention according to Claim 1 comprises: a first oscillator; a first counting means for counting the output of said first oscillator; a second oscillator having an oscillatory frequency changed according to an ambient brightness; a second counting means for counting the output of said second oscillator; and a brightness deciding means for judging the ambient brightness in accordance with the outputs of said first and second counting means.

In the invention according to Claim 2, said brightness deciding means judges the ambient brightness on the basis of a phase difference between the outputs of said first and second counting means.

In the invention according to Claim 3, said first and second oscillators, said first and second counting means and said brightness deciding means are formed over a common chip by the CMOS (complementary Metal Oxide Semiconductor) process.

In the invention according to Claim 4, said first and second oscillators are symmetric in their circuitry.

The invention according to Claim 5 comprises: an auxiliary light projecting means for projecting an auxiliary light to an object; a first switch means; an output means for generating a timing signal by said first switch means; and a charging circuit for performing a charge to project said auxiliary light projecting means in accordance with the outputs of said output means and said brightness deciding means.

In the invention according to Claim 6, said output means inhibits the charging action of said charging circuit when second switch means is not operated for a predetermined time period after said first switch means was operated.

In the invention according to Claim 7, an operation similar to that of the case in which said first switch means is activated is executed by the action of said second switch means before a film advance.

Brief Explanation of the Drawings

Fig. 1
A circuit diagram of the inside of the photometric IC of one example of the invention.
Fig. 2
An explanatory diagram showing the terminal array of the photometric IC of the same embodiment.
Fig. 3
An entire circuit diagram of the film with the lens.
Fig. 4
An appearance of the film with the lens.
Fig. 5
A timing chart of the same example.
Fig. 6
A timing chart of the embodiment of the invention.
Fig. 7.
A circuit diagram of the inside of the photometric IC of another embodiment of the invention.
Fig. 8
A timing chart of said another example of the invention.
Fig. 9
A circuit diagram of the inside of the photometric IC of still another example of the invention.
Fig. 10
A timing chart of said still another example of the invention.

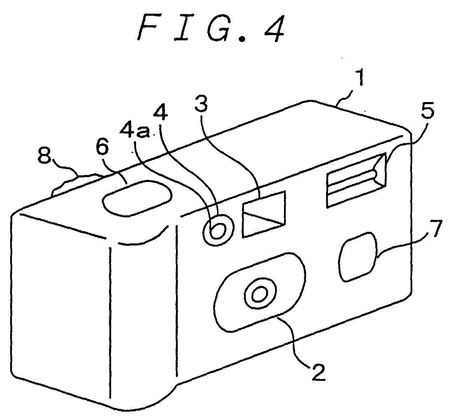

Here will be described the case in which a photometric device of the invention is applied to a low-end camera. An appearance of the low-end camera of the invention is shown in Fig. 4. A film body 1 with a lens is a casing made of plastics. A camera lens 2 is a plastic lens which is designed to best focus an object at a distance of about 3 m. A finder 3 is a plain finder. A photometric aperture 4 has a later-described CdS 32 buried in a transparent aperture of plastics and can meter the brightness in an object direction. The quantity of light, as comes from the photometric aperture 4 into the CdS 32, is adjusted by a diaphragm 4a. A stroboscope 5 constructing auxiliary light projecting means projects an auxiliary light to the object. A release switch 6 constructing second switch means is a switch for exposing a film by opening/closing a shutter. An automatic light emitting switch 7 constructing first switch means is a switch for enabling/disabling, each time it is pushed, the light emission of the stroboscope 5 in accordance with the ambient luminance.

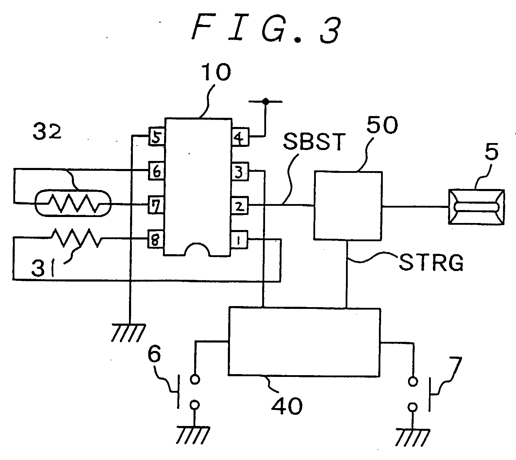

Next, a circuit block diagram of this low-end camera is shown in Fig. 3. A photometric IC (Integrated Circuit) 10 is an IC making a nucleus of the photometric device of the invention. To this, there are externally attached a cadmium sulfide cell 32 (as will be called the "CdS") for metering an object brightness and a reference resistor 31. A timing circuit 40 constructing output means generates, when the release switch 6 or the automatic light emitting switch 7 is pushed, a timing output signal for controlling the photometric IC 10 or a later-described stroboscope charging circuit 50. This will be detailed hereinafter. The stroboscope charging circuit 50 has a high capacity capacitor packaged therein for flashing the stroboscope 5. The stroboscope charging circuit 50 does not charge the aforementioned capacitor, when the later-described output BENBL terminal of the photometric IC 10 is at a low level (as will be called "L") of an ordinary value, but charges the aforementioned capacitor, only when the BENBL terminal changes to a high level (as will be called the "H"), to flash the stroboscope 5 in response to the output signal (or STRG signal) of the timing circuit 40 in accordance with the operation of the release switch 6.

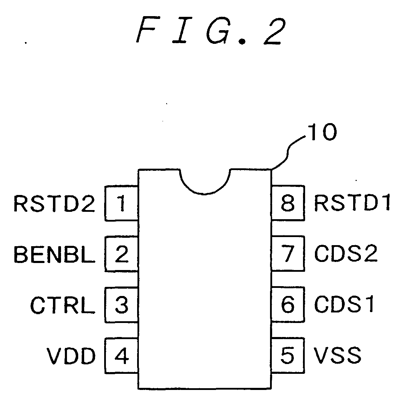

Here will be detailed the photometric IC 10. The pin arrangement of the photometric IC 10 is shown in Fig. 2. The CdS 32 is connected between the CDS1 terminal of a sixth pin and the CDS2 terminal of a seventh pin, and the reference resistor 31 is connected between the RSTD1 terminal of an eighth pin 8 and the RSTD2 terminal of a first pin. From the BENBL terminal of a second pin, there is outputted a signal for allowing the charge of the stroboscope. To the CTRL terminal of a third pin, there is inputted a signal for starting or stopping the action of the photometric IC 10. The VDD terminal of a fourth pin and the VSS terminal of a fifth pin are power supply terminals, of which the VDD terminal of the fourth pin is a high voltage input whereas the VSS terminal of the fifth pin is a low voltage input.

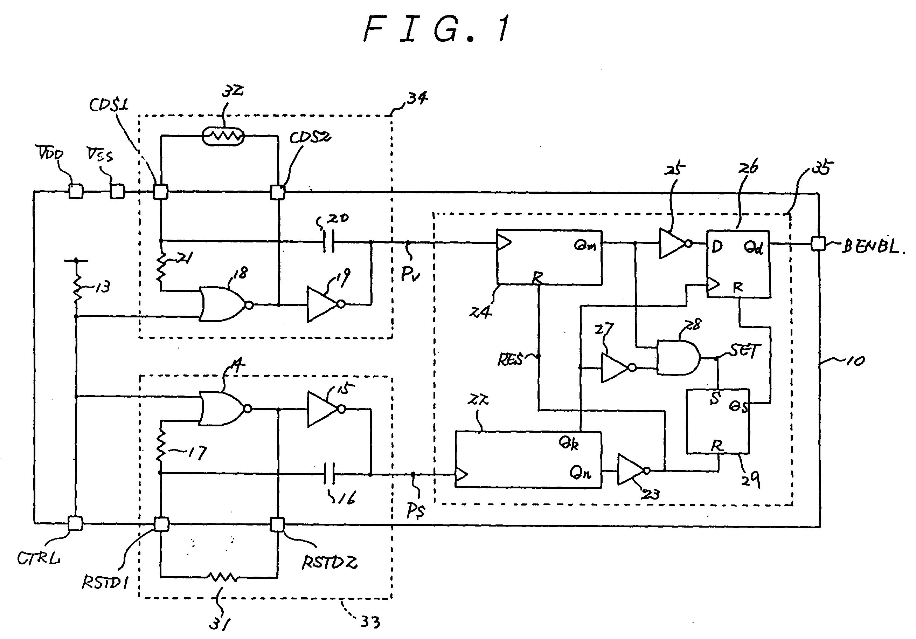

Moreover, the internal circuit of the photometric IC 10 is shown in Fig. 1. The CTRL terminal input is usually kept at "H" by a pull-up resistor 13 so that the outputs of NOR gates 14 and 18 are at "L". Here, when the CTRL terminal input is at "L", the NOR gates 14 and 18 are opened to start the photometry.

The NOR gate 14, an inverter 15, a capacitor 16 and a resistor 17 construct a first oscillator 33 together with the reference resistor 31 which are externally connected between the RSTD1 terminal and the RSTD2 terminal. The first oscillator 33 continuously outputs the square waves of a frequency and a duty ratio, which are determined according to the electric characteristics / the temperature characteristics of the individual elements, to a terminal Ps.

Likewise, the NOR gate 18, an inverter 19, a capacitor 20 and a resistor 21 construct a second oscillator 34 which uses the CdS 32 externally connected between the CDS1 terminal and the CDS2 terminal as an oscillatory frequency determining element, and continuously outputs the square waves of a frequency and a duty ratio, which are also determined according to the electric characteristics / the temperature characteristics of the individual elements, to a terminal Pv. The optimum value of the resistance of the reference resistor 31 is selected at the manufacture according to the characteristics of the CdS 32. In this example, the capacitor 16 and the capacitor 20 can be packaged in the photometric IC 10 because their capacities are at about 30 picofarads at the maximum.

Here in this example, the quantity of light to come into the CdS 31 is changed by the diaphragm 4a shown in Fig. 4. Therefore, a variable resistor, as has been required in the prior art for establishing a proper resistance range of the CdS 31 in a predetermined brightness range, can be eliminated to make an electric adjustment unnecessary. When the proper adjustment cannot be achieved by the diaphragm 4a, however, a resistor or the like may be added in series or in parallel to the CdS 31 for the adjustment.

A counter 22 constructing first counting means is a binary counter of n bits for inputting the output of the first oscillator 33 as a clock and dividing it into n stages.

A counter 24 constructing second counting means is a binary counter of m bits and reset with an inverted signal RES of an MSB (Most Significant Bit) signal Qn of the counter 22 and to input the output of the second oscillator 33 as a clock and to divide it into m stages.

A D-latch 26 inputs at D an inverted signal of the signal coming from the output terminal Qm of the counter 24 and a signal from the output terminal Qk of the counter 22 as a clock and outputs the resultant signal from the terminal Qd to the BENBL terminal. Here, "k" is smaller by 1 than "n" so that the signal from the terminal Qk is a clock having a frequency double as high as that of the signal from the terminal Qn, that is, divided by a stage less by one.

Reference numeral 29 designates a set/reset flip-flop which is set with an AND signal SET between the inverted signal of the signal outputted from the terminal Qk and the signal outputted from the terminal Qm and is reset with the signal RES of the inverted signal of the signal outputted from the terminal Qn, so that the D-latch 26 is reset with the signal coming from the terminal Qs. Reference numerals 23, 25 27 designate inverters, and numeral 28 designates an AND gate.

Here, the counters 22 and 24, the gate 28, the D-latch 26, the inverters 23, 25 and 27 and the flip-flop 29 construct a brightness deciding circuit 35 (or brightness deciding means).

The circuit excepting the CdS 32 and the reference resistor 31 is formed over a single chip by the CMOS process so that it can act at a voltage as low as 1 V or less. When the stroboscope is charged with a dry cell of 1.5 V, the power supply voltage may temporarily drop to about 1 to 1.2 V. In this case, too, the circuit can be activated without any problem. As a result, the circuit can be reliably activated even when it is applied to a low-end camera using a power supply of such low voltage and capacity as those of one dry cell (of about 1.5 V).

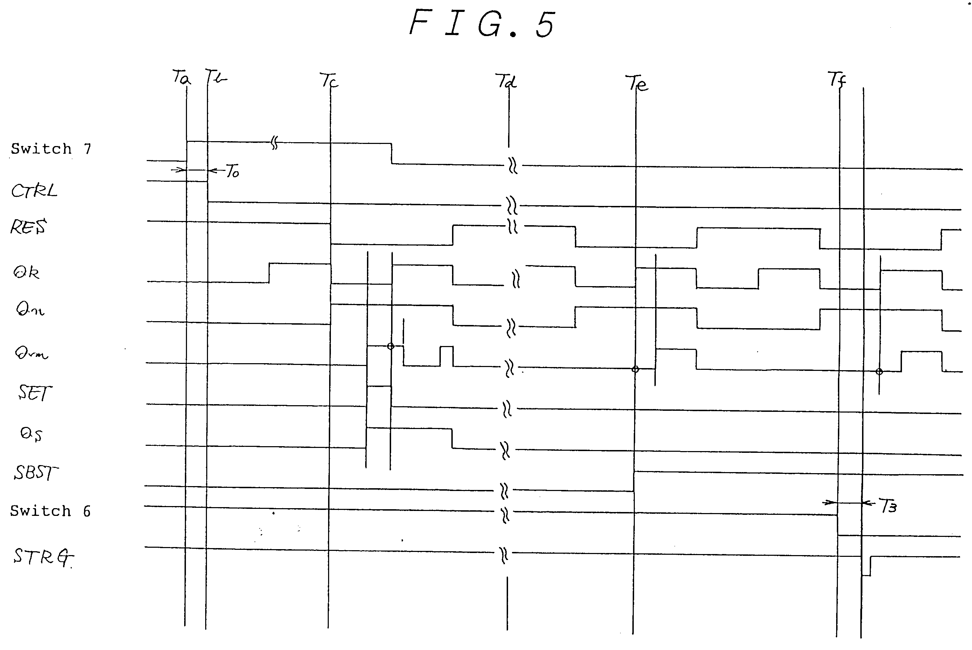

Next, the actions of Fig. 3 will be described with reference to Fig. 5. Here in Fig. 5: Switches 6 and 7 indicate the states of the switches 6 and 7; letters CTRL to Qd indicate the voltage levels of the terminals CTRL to Qd of Fig. 1; and letters STRG indicate the state of the STRG signal shown in Fig. 3.

When the automatic light emitting switch 7 is pushed (at time Ta), the timing circuit 40 turns the CTRL terminal to "L" (at time Tb) with a delay of time T0 so as to eliminate the chattering of an automatic light emitting switch 7. When the CTRL terminal becomes the "L", the NOR gates 14 and 18 are opened, as described hereinbefore, so that the first and second oscillators 33 and 34 start their oscillations. The counter 22 counts the output of the first oscillator 33 so that the voltage levels of its terminals Qk and Qn change, as shown in Fig. 5.

Since the counter 24 is reset when the terminal Qn of the counter 22 is at "L", on the other hand, it does not count the output of the second oscillator 34 in this state. When the counting of the counter 22 advances so that its terminal Qn becomes "H", the counter 24 is released from its reset state to start the counting of the output of the second oscillator 34.

In Fig. 5, the period of times Tc to Td indicates the case of a bright environment. In this state, the CdS 32 takes a low resistance, and the second oscillator 34 takes a high oscillatory frequency. In the "H" state of the terminal Qn, therefore, the counting period of the counter 24 is shortened to accelerate the timing at which the level "H" appears at the terminal Qm of the counter 24.

On the other hand, the output of the first oscillator 33 does not change with the brightness of the environment but keeps a substantially constant period so that the changing timing of the voltage level of the terminal Qk does not fluctuate.

In the case of the bright environment (Tb to Td), therefore, the terminal Qm of the counter 24 becomes "H" before the rise of the signal is outputted from the terminal Qk of the counter 22, so that the output of the D-latch 26 becomes "L". As a result, the BENBL terminal is kept at "L", and the capacitor of the stroboscope charging circuit 50 is not charged.

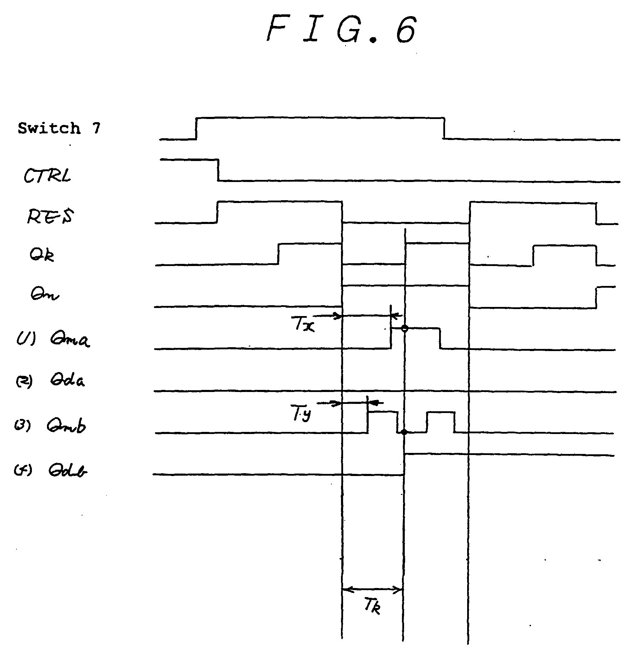

Here will be described countermeasures of the brightness deciding circuit 35 against malfunctions at a high luminance time with reference to Fig. 6. In Fig. 6, portions identical to those of Fig. 5 are designated by the common reference letters.

First of all, here will be briefly described why the countermeasures against the malfunctions at the high luminance time are necessary for the brightness deciding circuit 35.

Assumed that the time period for which the terminal Qk of the counter 22 is at "L" is designated by Tk and assumed that the time period from the fall of the signal

nal at the terminal Qk to the rise of the signal to be generated at the terminal Qm of the counter 24 is designated by Tn (n = x, y) , for the ambient brightness is within a suitable range and Tk > Tn (= Tx) > 0.5 Tk (as shown at (1) and (2) in Fig. 6), the rise of the signal at the terminal Qk is timed when the terminal Qm is in the state "H" (as shown at (1) in Fig. 6). In this case, the D-latch 26 outputs the "L" without any problem, as described hereinbefore. (Reference should be made to (2) of Fig. 6).

As the environment grows brighter to Tn (= Ty) < 0.5 Tk (as shown at (3) and (4) in Fig. 6), however, at the rising time of the signal at the terminal Qk, the terminal Qm becomes "H" and then returns to "L". If, in this state, the D-latch 26 is activated without providing the flip-flop 29, the gate 28 and the inverter 27, for example, there arises a disadvantage that the charge starting signal is outputted even in a high luminance. This example prevents the aforementioned disadvantage, i.e., the malfunction at the high luminance time by providing the circuit which is composed of the flip-flop 29, the gate 28 and the inverter 27.

Here will be described the actions of the circuit which is composed of the flip-flop 29, the gate 28 and the inverter 27.

As the terminal Qm becomes "H" when the ambient brightness is high so that the terminal Qk is at "L", as shown in Figs. 1 and 5, the level "H" at the terminal Qm passes as the SET signal through the AND gate 28 to set the flip-flop 29. This flip-flop 29 resets, when set, the D-latch 26 to hold the output of the D-latch 26 at "L".

The flip-flop 29 is not reset till the terminal Qn of the counter 22 becomes "L" so that the D-latch 26 keeps the output "L". As a result, the D-latch 26 keeps the output "L" even if its D-terminal returns again to "L" while the terminal Qn is at "H", so that the aforementioned malfunctions at the high luminance time can be prevented.

When the terminal Qn of the counter 22 becomes "L", the D-latch 26 is released from its reset state. At this time, however, the counter 24 is reset to turn the terminal Qn to "H" so that malfunction at the high luminance time is not caused.

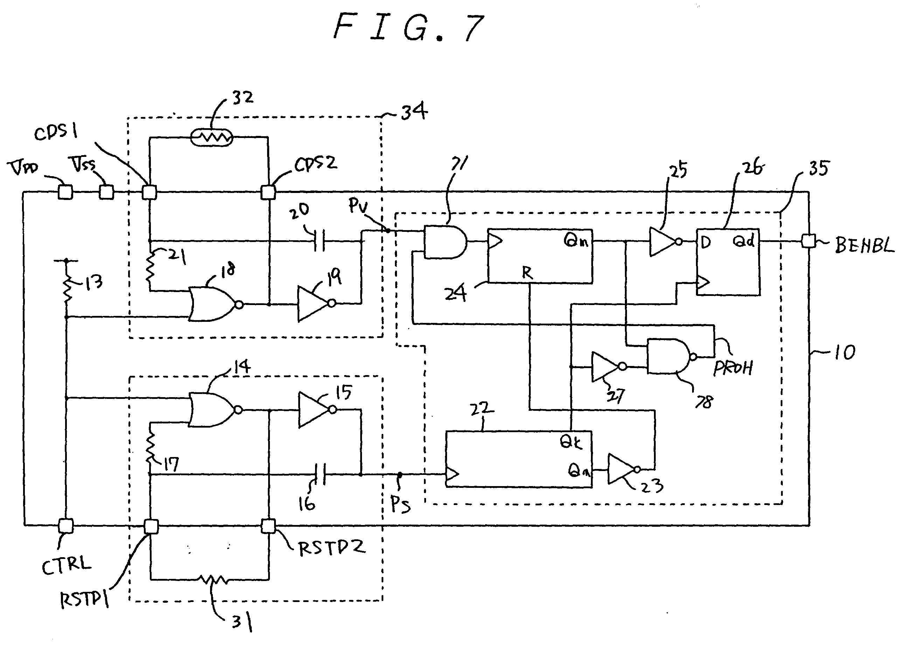

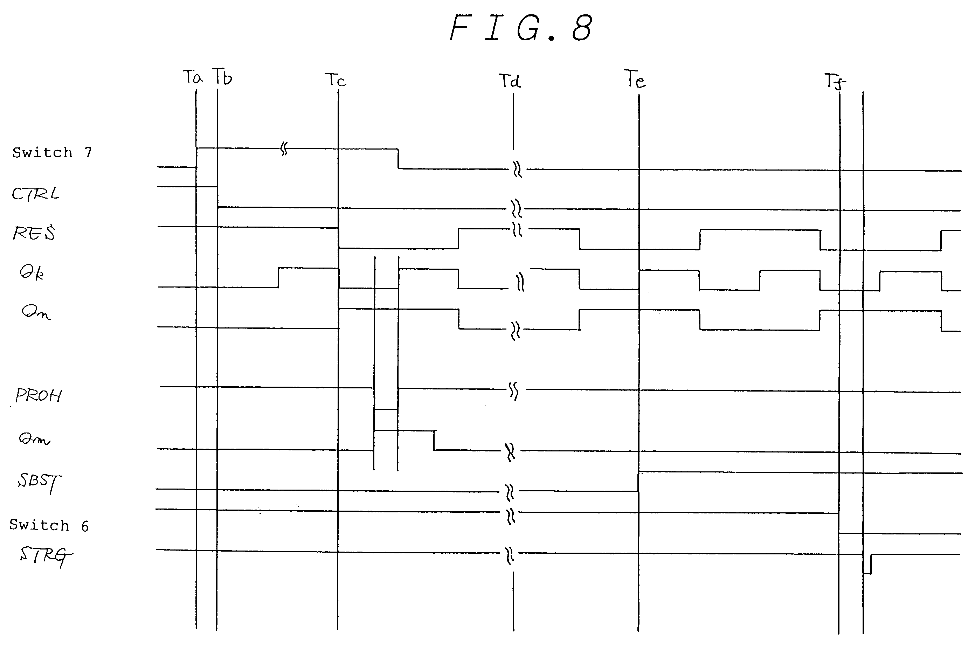

Here, the malfunction preventing circuit at the high luminance time should not be limited to the aforementioned one but can be modified in various manners. Another example is shown in Figs. 7 and 8.

In Fig. 7, reference numeral 71 designates an AND gate, and numeral 78 designates a NAND gate. The portions identical to those of Fig. 1 are designated by the common reference numerals. In Fig. 8, on the other hand, reference letters PROH designate an output level of the NAND gate 78, and the portions identical to those of Fig. 5 are designated by the common reference letters.

In this case, the AND signal between the inverted signal PROH of the aforementioned SET signal and the output of the second oscillator is inputted as a clock to the counter 24, but this clock input to the counter 24 is inhibited when the PROH signal is outputted.

The actions will be briefly described. When the terminal Qm of the counter 24 becomes "H" before the terminal Qk of the counter 22 becomes "H", the NAND gate 78 outputs the PROH signal at "L" to close the AND gate 71 thereby to shut the input to the counter 24.

As a result, the terminal Qm of the counter 24 is kept at "H". When the terminal Qk of the counter 22 becomes "H" in this state, the D-latch 26 is triggered by the rise to latch the inverted output "L" of the terminal Qm and to keep the output "L" (as shown in Fig. 8).

It is natural that the aforementioned protective circuit can be dispensed with if the aforementioned disadvantage can be eliminated by adjusting the values of the individual elements of the first and second oscillators or by another method (e.g., by arranging a filter in front of the photometric element).

Reverting to the timing chart of Fig. 5, it is assumed that the ambient brightness drops from the vicinity of the time Td. It is considered to occur in the case of movement to a dark place or in the case of approach to an object that the brightness drops when the photographer grips the camera while intending to photograph.

Since the resistance of the CdS 32 increases in this case, the oscillatory frequency of the second oscillator becomes low to delay the timing for the terminal Qm of the counter 24 to change to "H". As a result, even when the rise in the signal is outputted from the terminal Qk of the counter 22, the terminal Qm of the counter 24 remains at "L", but the output of the D-latch 26 becomes "H". As a result, the BENBL terminal becomes "H", and the charge starting signal SBST (at "H") is outputted from the BENBL terminal so that the charge of the capacitor of the stroboscope charging circuit 50 is started.

When the photographer winds up the film by one frame with a film advancing dial 8 and pushes the release switch 6 at time Tf, the timing circuit 40 outputs the stroboscope trigger STRG to the stroboscope charging circuit 50 with a delay of time period T3 for maximizing the aperture from the fall of the release switch 6, thereby to flash the stroboscope 5.

The charge starting signal is outputted, as apparent from Fig. 5, even if the environment becomes dark so that the resistance value of the CdS 32 increases so that the signal Qm is not outputted.

Here, similar effects could be obtained even if the inverter 25 is eliminated from the example of the circuit of Fig. 1 by connecting the terminal Qs with the D-terminal of the D-latch 26 and by connecting the terminal Qk with the clock terminal of the D-latch 26.

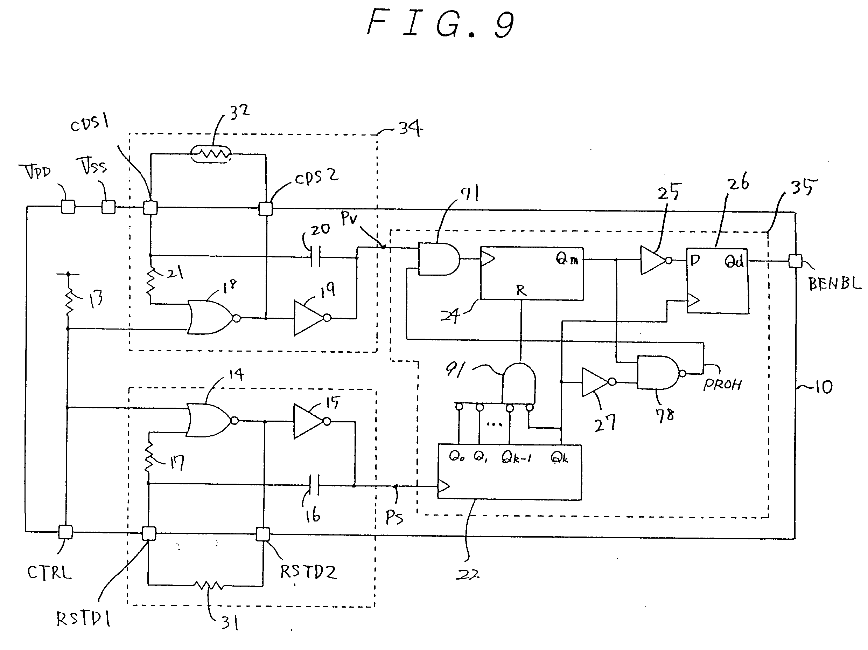

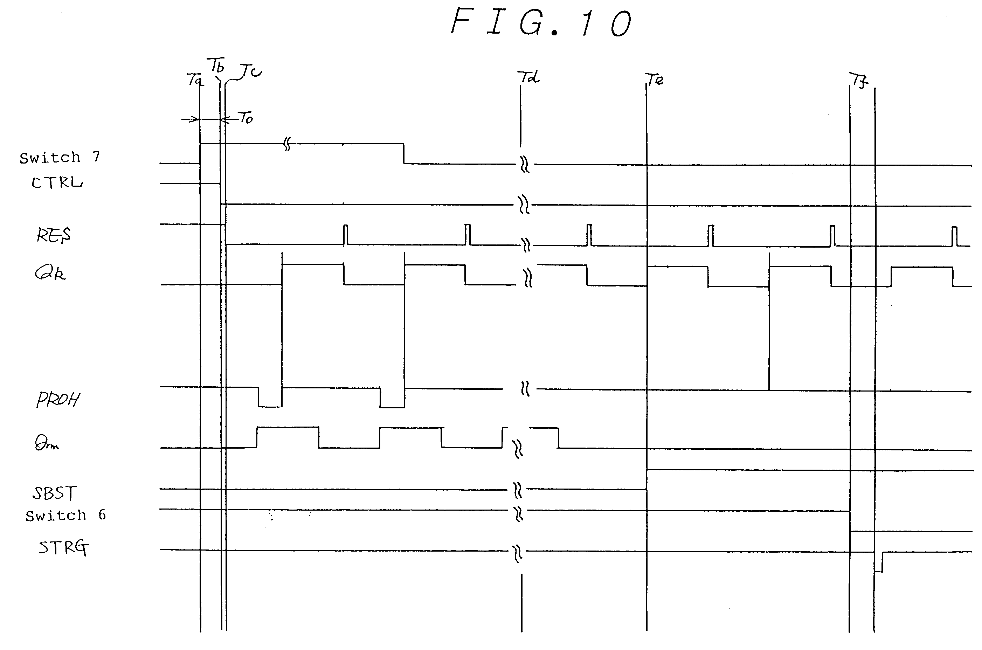

Still another embodiment will be described with reference to Figs. 9 and 10. In Fig. 9, reference numeral 91 designates a negative input AND gate. In Figs. 9 and 10, portions identical to those of Figs. 7 and 8 are designated by the common reference numerals.

The negative input AND gate 91 makes an AND of all the outputs of the counter 22 so that it resets the counter 24 periodically each time the terminal Qk becomes "L". The counter 24 starts, after reset, its counting action to set the terminal Qm to "H" while the terminal Qk is at "L", in the case of the bright environment, as described hereinbefore. In this case, the brightness can be judged without depending on the output of the terminal Qn of the counter 22 so that the judgement interval for the brightness can be made shorter than that of the foregoing example.

Here, the reason why the ambient luminance is lowered at or after the time Td is considered to come not only from a photography in the dark but also from keeping of the low-end camera in a bag or pocket. In this case, the result is that the charge of the stroboscope 5 is unnecessarily continued although the photographer has no will of photography. In order to avoid this, the timing circuit 40 acts to turn OFF the CTRL terminal forcibly, when the release switch 6 is not pushed even if a predetermined time period (e.g., 3 minutes) elapses in the dark. This makes it possible to suppress the useless power consumption. In this case, a series of the aforementioned actions are made if the photographer operates the automatic light emitting switch 7 again.

Unless the automatic light emitting switch 7 is pushed, on the other hand, the capacitor of the stroboscope charging circuit 50 is not charged. When the ambient brightness is apparently sufficient, therefore, the photography can be continued without pushing the automatic light emitting switch 7.

The foregoing individual examples have been described on the base in which the photometric device of the invention is applied to the low-end camera. Despite of this description, however, the invention could be applied to cameras of other kinds or more expensive cameras.

Although the automatic light emitting switch 7 and the release switch 6 are separately arranged, on the other hand, the object of this example can be realized by only one switch if the push of the release switch 6 before the film is wound up by the film feed dial 8 is made to perform an action similar to that of the automatic light emitting switch 7.

Depending upon the circuit construction of the oscillator, on the other hand, the one end of the reference resistor 31 and the CdS 32 could be connected with the VDD terminal or the VSS terminal. In this case, the photometric IC 10 may have six pins and can be made smaller.

Although the release button is used as the trigger for the stroboscope light emission, on the other hand, the switch can be replaced by a member which moves as the shutter member is opened/closed, and a sensor can be used for detecting the opening/closing the shutter member mechanically/optically.

On the other hand, there may be provided display means of LED or the like for indicating that the automatic light emitting switch 7 is pushed to operate the photometric IC 10.

Since the first and second oscillators are made symmetric in their circuitry, on the other hand, the change in the ambient temperature and the voltage fluctuation can be offset to stabilize the operations and to make it unnecessary unlike the prior art to add a circuit for temperature compensations. This effect is made more prominent by integrating the necessary portions into a circuit. Especially, the output of the oscillator is divided in frequency by the counter so that the capacitor for determining the time constant can be reduced in capacity and packaged in the integrated circuit.

As has been described hereinbefore, according to the invention, neither a microcomputer nor a comparator is required to lower the cost and reduce the current consumption, as compared with the prior art. On the other hand, the ambient brightness is judged not according to the outputs of the individual oscillators but according to the outputs of the individual counting means for counting the outputs of the individual oscillators. Even if the second oscillator has used little change in the oscillatory frequency according to the ambient brightness, therefore, the little differences can be accumulated by a counting circuit so that the ambient brightness can be reliably judged according to the accumulated outputs. This makes it unnecessary to use an expensive second oscillator being excellent in the brightness responsibility and having a large construction.

The first and second oscillators, the first and second counting means and the brightness deciding means are formed over the common chip by the CMOS process so that they can act at a voltage of 1 V or less on principle. If the invention is applied to the low-end camera or the like, therefore, it can be reliably operated even by a power supply of low voltage and capacity such as one dry cell (at about 1.5 V).

Since the first and second oscillators are made symmetric in their circuitry, the change in the ambient temperature and the voltage fluctuation can be offset to stabilize the operations and to make it unnecessary unlike the prior art to add a circuit for temperature compensations. This effect is made more prominent by integrating the necessary portions into a circuit.

The camera comprises: the auxiliary light projecting means for projecting an auxiliary light to an object; the first switch means; the output means for generating a timing signal by the first switch means; and the charging circuit for performing the charge for causing the auxiliary light projecting means to project according to the outputs of the output means and the brightness deciding means. As a result, the auxiliary light can be automatically projected according to the ambient brightness by the construction of lower cost, lower current consumption and smaller space than those of the prior art.

The output means inhibits the charging operation of the charging circuit, when the second switch means is not activated for the desired time period after the first switch means is operated. This makes it possible to avoid the situation, in which the charge is unnecessarily continued although the photographer has no will, to suppress the useless power consumption.

By the action of the second switch means before the film is advanced, actions similar to those of the case in which the first switch means is activated are executed so that the photography accompanied by the automatic auxiliary light projection can be realized merely by the action of the second switch means thereby to improve the operability.

Designations of Reference Numerals

| | |
|---|---|
| 5 | Auxiliary Light Projecting Means |
| 6 | Second Switch Means |
| 7 | First Switch Means |
| 22 | First Counting Means |
| 24 | Second Counting Means |
| 33 | First Oscillator |
| 34 | Second Oscillator |
| 35 | Brightness Deciding Means |
| 40 | Output Means |
| 50 | Charging Circuit |

**Claims**

1. A photometric device characterized by comprising:

   a first oscillator;
   a first counting means for counting the output of said first oscillator;
   a second oscillator having an oscillatory frequency changed according to an ambient brightness;
   a second counting means for counting the output of said second oscillator; and
   a brightness deciding means for judging the ambient brightness in accordance with the outputs of said first and second counting means.

2. A photometric device as set forth in Claim 1, characterized in that said brightness deciding means judges the ambient brightness on the basis of a phase difference between the outputs of said first and second counting means.

3. A photometric device as set forth in Claim 1, characterized in that said first and seconds oscillators, said first and second counting means and said brightness deciding means are formed over a common chip by the CMOS process.

4. A photometric device as set forth in Claims 1 and 3, characterized in that said first and second oscillators are symmetric in their circuitry.

5. A camera using a photometric device as set forth in Claim 1, 2, 3 or 4, characterized by comprising: an auxiliary light projecting means for projecting an auxiliary light to an object; first switch means; an output means for generating a timing signal by said first switch means; and a charging circuit for performing a charge to actuate said auxiliary light projecting means in accordance with the outputs of said output means and said brightness deciding means.

6. A camera using a photometric device as set forth in Claim 1, 2, 3 or 4, characterized in that said output means inhibits the charging action of said charging circuit when second switch means is not operated for a predetermined time period after said first switch means was operated.

7. A camera using a photometric device as set forth in Claim 5 or 6, characterized in that an operation similar to that of the case in which said first switch means is activated is executed by the action of said second switch means before a film advance.

F I G. 1

# F I G . 2

# FIG. 3

# F I G. 4

# F I G . 5

EP 0 943 955 A2

# FIG. 6

# FIG. 7

EP 0 943 955 A2

# FIG.8

Switch 7

CTRL

RES

Qk

Qn

PROH

Qm

SBST

Switch 6

STRG

EP 0 943 955 A2

FIG. 9

EP 0 943 955 A2

# FIG.10

EP 0 943 955 A2